# EUROPÄISCHE PATENTANMELDUNG

(11) **EP 1 148 308 A1**
(43) Veröffentlichungstag der Anmeldung: **24.10.2001**
(21) Anmeldenummer: 01108796.2
(22) Anmeldetag: 07.04.2001
(51) Int. Cl.: F25B 35/04

(54) **Adsorber-/Desorber-Wärmetauscher**

(30) Priorität: 17.04.2000 AT 6622000
(71) Anmelder: Vaillant GmbH, 42859 Remscheid (DE)
(72) Erfinder: Lang, Rainer, Dr., 51067 Köln (DE)
(74) Vertreter: Heim, Johann-Ludwig, Dipl.-Ing.

(57) **Zusammenfassung**

Adsorber-/Desorber-Wärmetauscher mit einem von Granalien (4) umgebenen von einem wärmeaufnehmenden Medium durchströmbaren Rohr (1). Um einen raschen Ablauf des Sorptionsprozeßes sicherzustellen, ist vorgesehen, daß das Rohr (1) mit Rippen (2) versehen ist, die einen lichten Abstand (5) voneinander aufweisen, der geringfügig größer als die Korngröße der Granalien (4), z.B. eines Zeolithen ist, und der Raum zwischen den Rippen (2) mit einlagig eingebrachten Granalien (4) ausgefüllt ist, wobei die Rippen (2) zumindest im Bereich des äußeren Randes schräg nach oben verlaufen.

## Beschreibung

Die Erfindung bezieht sich auf einen Adsorber-/Desorber-Wärmetauscher gemäß dem Oberbegriff des Anspruches 1.

Bei bekannten derartigen Adsorber-/Desorber-Wärmetauschern ist ein Rohr in Granalien eingebettet.

Bei solchen Wärmetauschern ergibt sich der Nachteil, daß aufgrund der schlechten Wärmeleitfähigkeit des Adsorbens und des hohen Diffusionswiderstandes innerhalb der Schüttung der Sorptionsprozeß nur sehr langsam und daher uneffektiv abläuft.

Ziel der Erfindung ist es, diesen Nachteil zu vermeiden und einen Adsober-/Desorber-Wärmetauscher der eingangs erwähnten Art vorzuschlagen, bei dem ein rascher Ablauf des Sorptionsprozeßes sichergestellt ist.

Erfindungsgemäß wird dies bei einem Wärmetauscher der eingangs erwähnten Art durch die kennzeichnenden Merkmale des Anspruches 1 erreicht.

Durch die vorgeschlagenen Maßnahmen wird erreicht, daß einerseits die Wärmetauschfläche des Rohres vergrößert wird und zwischen den einzelnen Rippen nur eine einlagige Schüttung möglich ist. Dadurch kann der Sorptionsprozeß trotz der schlechten Wärmeleitfähigkeit und trotz des großen Diffusionswiderstandes des Adsorbens wesentlich schneller und effektiver ablaufen. Dabei liegt eine große Stoffaustauschfläche für die Adsorption und Desorption des Adsorbats, z.B. Wasser, vor, und die Wärme kann durch den direkten Kontakt zur Rippe schnell mit dem Wärmeträger, der im Rohr strömt, ausgetauscht werden.

Dabei ist durch die vorgeschlagene Gestaltung der Rippen sichergestellt, daß die Granalien nicht von den Rippen fallen. Außerdem kann die Beladung der Rippen mit den Granalien sehr einfach erfolgen. Dabei können die Rippen in ihren Randbereichen mit einem nach oben abgewinkelten Rand versehen sein.

Im Hinblick auf eine besonders einfache Beladung der Rippen mit den Granalien ist es vorteilhaft, die Merkmale des Anspruches 2 vorzusehen.

### Die Erfindung wird nun anhand der Zeichnung näher erläutert. Dabei zeigen:

Fig. 1 schematisch einen erfindungsgemäßen Wärmetauscher und

Fig. 2 ein Detail einer weiteren Ausführungsform eines erfindungsgemäßen Wärmetauschers.

Der dargestellte Adsorber-/Desorber-Wärmetauscher weist ein von einem wärmeaufnehmenden Medium durchströmbares Rohr 1 auf. Dieses Rohr 1 ist mit Rippen 2 versehen und steht mit diesen in einer gut wärmeleitenden Verbindung.

Zwischen den einzelnen Rippen 2 sind Granalien 4 in jeweils einer Lage eingebracht, wobei die Korngröße der Granalien geringfügig kleiner als der lichte Abstand 5 zweier Rippen 2 ist. Dadurch ist sichergestellt, daß sich zwischen je zwei Rippen 2 lediglich eine Lage von Granalien befindet, wobei es sich vorteilhafterweise um einen Zeolith handelt.

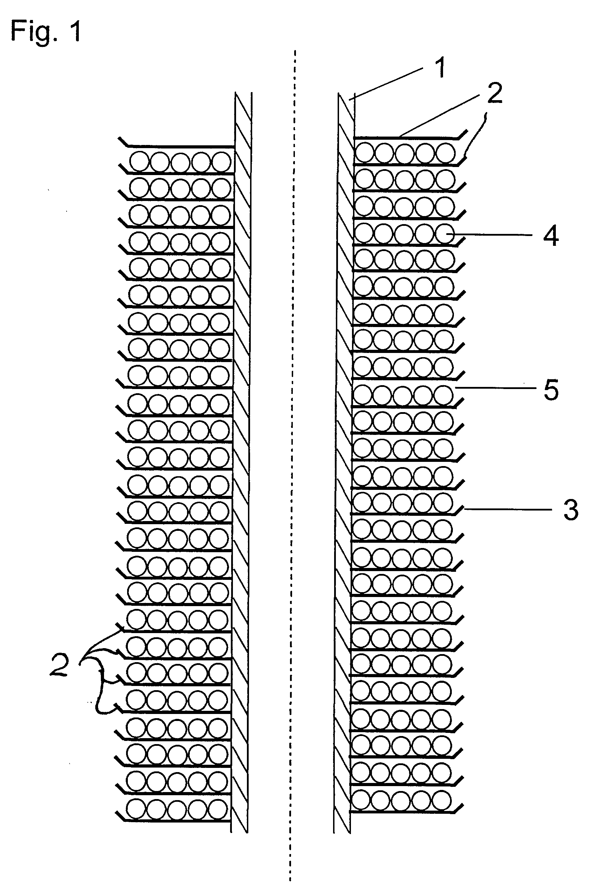

Die Rippen 2 sind bei der Ausführungsform nach der Fig. 1 mit einem schräg nach oben abgewinkelten Rand 3 versehen. Dadurch wird das Herausfallen der Granalien 4 verhindert.

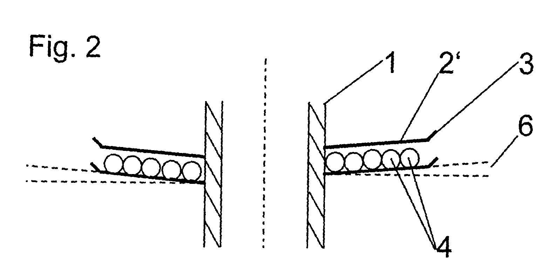

Bei der Ausführungsform nach der Fig. 2 sind die Rippen 2' trichterförmig ausgebildet und verlaufen in einem Winkel 6 zur Horizontalen radial schräg nach oben.

## Patentansprüche

1. Adsorber-/Desorber-Wärmetauscher mit einem von Granalien (4) umgebenen von einem wärmeaufnehmenden Medium durchströmbaren Rohr (1), **dadurch gekennzeichnet, daß** das Rohr (1) mit Rippen (2) versehen ist, die einen lichten Abstand (5) voneinander aufweisen, der geringfügig größer als die Korngröße der Granalien (4), z.B. eines Zeolithen ist, und der Raum zwischen den Rippen (2) mit einlagig eingebrachten Granalien (4) ausgefüllt ist, wobei die Rippen (2) zumindest im Bereich des äußeren Randes schräg nach oben verlaufen.

2. Wärmetauscher nach Anspruch 1, **dadurch gekennzeichnet, daß** die Rippen (2') trichterfömig verlaufen.
